# EUROPEAN PATENT SPECIFICATION

(11) **EP 1 746 697 B1**
(45) Date of publication and mention of the grant of the patent: **05.10.2011**
(21) Application number: 06076368.7
(22) Date of filing: 05.07.2006
(51) Int. Cl.: H02G 3/04, H02G 3/10

(54) **Securing element for securing a box to a wire cable tray**
Befestigungselement zum Befestigen einer Dose an einen Drahtgitterkanal
Elément de fixation pour fixer une boîte à une canalisation à fils

(30) Priority: 18.07.2005 NL 1029552
(43) Date of publication of application: 24.01.2007
(73) Proprietor: Attema B.V., 4203 NJ Gorinchem (NL)
(72) Inventor: De Hoog, Antonie, 4213 De Dalem (NL)
(74) Representative: Mertens, Hans Victor

(56) References cited:
- EP-A- 1 052 753
- DE-U1- 29 616 745
- SE-C2- 500 194
- US-A- 4 699 289

## Description

The invention relates to a securing element for securing a box to a wire cable tray according to the preamble of claim 1. A box of this type is in particular a box for connecting electrical cables inside it and/or for electrical cables to be connected to.

Various embodiments of securing elements of the abovementioned type are known in practice.

All the known securing elements are formed by stamping and bending from sheet metal. As a result, they can easily have sharp edges and projections, which can injure a user even before he fits a securing element of this type to a wire cable tray. In addition, the metal design prevents integration of the securing element and a box, which generally consists of plastics material.

A number of known securing elements are provided with lips. During mounting, a fitter holds the element against the side of a wire cable tray and bends the lips over wires of the tray. The bending operation requires the use of pliers or a hammer. This form of fitting is time-consuming, energy-consuming and when working on ladders or the like can lead to dangerous situations for the fitter.

Some of the known securing elements can be fitted to a wire cable tray by means of a single operation. However, these known securing elements are only suitable for fitting to wire cable trays which comply with certain specifications. In particular, wires to which the securing element is fitted must be at predetermined distances from one another and have predetermined thicknesses. Securing elements of this type therefore cannot be used universally for the very large number of variants of commercially available wire cable trays.

None of the known securing elements is suitable for secure fitting to one side of a wire cable tray which on this side has only one wire extending in the longitudinal direction of the tray.

The document DE 29616745 U1 discloses the preamble of claim 1.

It is an object of the invention to overcome at least one of the abovementioned drawbacks of the known technology.

According to the invention, the said object is achieved by providing a securing element according to claim 1.

The said object is also achieved, according to the invention, by providing an integrated combination of a securing element of this type and a box according to claim 13.

Other properties and advantages of the method and the device according to the invention will become clear from the following explanation of an embodiment of a securing element according to the invention with reference to the accompanying drawing, in which:
Fig. 1 shows a perspective view of part of a known wire cable tray for which the invention can be used;
Fig. 2 shows a perspective view of an embodiment of a securing element according to the invention;
Fig. 3 shows a perspective view of the securing element from Fig. 2 and a box which has been placed against it;
Fig. 4 shows a cross section through a lug of the securing element of the assembly from Fig. 3 which has been coupled to a wire cable tray; and
Fig. 5 shows a cross section as in Fig. 4 but used for a wire cable tray of different design.

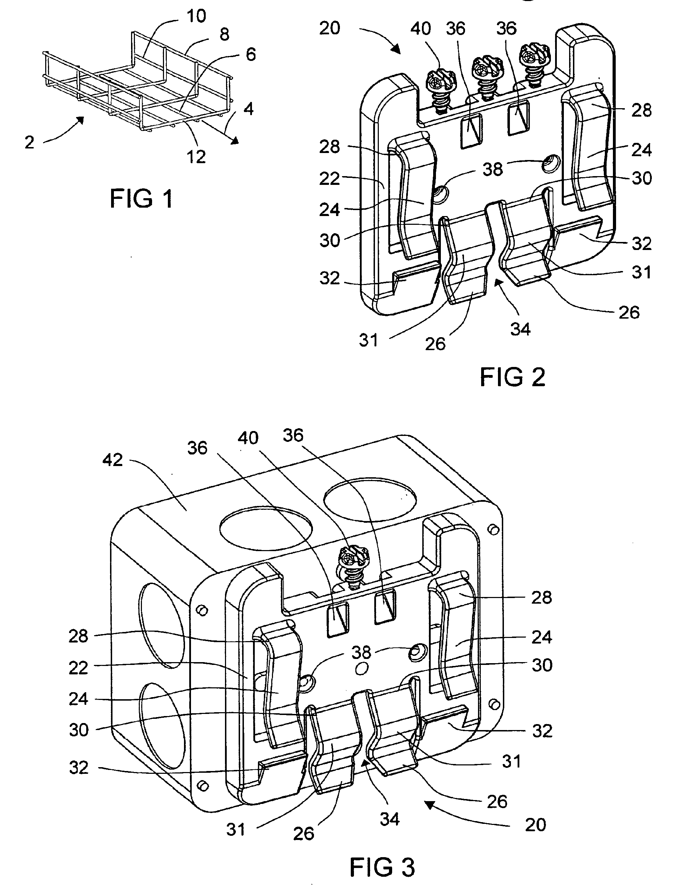

To facilitate understanding of the invention, Fig. 1 shows a perspective view of part of a known wire cable tray. A tray of this type is intended in particular for electrical cables to be routed inside it. The tray 2 shown comprises a number of longitudinal wires which extend in the longitudinal direction thereof and are denoted by the arrows 4, such as a wire 6 of the bottom of the tray 2, a top wire 8, which defines an upper edge of one side of the tray 2, and a lower (with respect to the bottom of the tray) longitudinal wire 10 on a side of the tray 2 at a distance from the top wire 8. The longitudinal wires 6, 8 and 10 are secured to U-shaped transverse wires 12 which are positioned transversely to the longitudinal directions 4.

There are numerous configurations of wire cable trays with different dimensions, wire thicknesses and different numbers of longitudinal wires. To enable a box, such as a junction box for electrical cables, to be secured to one side of a tray of this type, it is known to use plate-like securing elements which have lips that can be bent over wires of a tray, after which a box can be secured to the securing element. The wide range of configurations of wire cable trays means that many different plate-like securing elements of this type are in use. In addition, the securing of elements of this type to a wire cable tray is time-consuming and also presents risks to the safety of operating staff.

As an alternative to a known plate-like securing element of this type, the invention proposes a securing element which can be used universally and of which Fig. 2 shows a perspective view of an embodiment 20.

The securing element 20 comprises a base portion 22, which overall is substantially flat. On a main side of the base portion 22 there are lips 24 and 26, which all face in the same direction. There are two long lips 24, each along one side of the base portion 22, and two short lips 26 at a different edge, in Fig. 2 the lower edge, of the base portion 22. Different numbers of lips and different locations thereof are also possible. At least the long lips 24 have a length which is at least four times greater than the diameter of the thickest tray wire to which it is desired to couple the securing element 20.

The long lips 24 merge into the base portion 22 via transition regions 28. The short lips 26 merge into the base portion 22 via transition regions 30. The transition regions 28 and 30 are such that the free ends of the lips 24 and 26 can be moved flexibly towards and away from the base portion 22. The lips 24 and 26 rotate through a small angle about axes which pass through the transition regions 28 and 30. These axes are parallel to one another. After the securing element 20 has been positioned on a wire cable tray 2, these axes are also parallel to the longitudinal wires 6, 8, 10 of the tray 2. The flexible transition regions 28 and 30 serve to allow simple fitting of the securing element 20 to a tray and enable the lips 24 and 26 to press flexibly against tray wires of different thicknesses.

The short lips 26 have a bent shape such that a protuberance 31 of a lip 26 is located further away from the base portion 22 than a portion of the lip 26 which is closer to the free end of the lip 26. A protuberance 31 of this type or a plurality of protuberances 31 in a line, parallel to the said axes, form a passage for receiving a longitudinal wire 8, 10 of the tray 2. At a short distance from a centre axis of a passage formed by a protuberance 31, the base portion 22 has one or more locking lugs 32. The locking lugs 32 prevent a longitudinal wire which has been received in a passage formed by the protuberances 31 of the lips 26 from easily escaping from said passage. To remove a longitudinal wire 8, 10 from a passage of this type, a user has to perform a deliberate action, specifically that of sufficiently bending the associated lips 26 away from the base portion 22.

There is preferably a distance between two adjacent short lips 26, of which the centre axes of the passages formed by the protuberances 31 lie in line, in such a manner that a transverse wire 12 of a wire cable tray 2 can be received between these short lips 26. It is preferable for the said distance to decrease the more closely, as seen from the free ends of the short lips 26, it is measured to the transition regions 30 of the short lips 26. As a result, the short lips 26 form a converging holding space 34 which makes it easier to receive a transverse wire 12 between the lips 26 and prevents undesirable lateral displacement of the securing element 20 in the longitudinal direction 4 of the tray 2.

One or more channels 36 and threaded holes 38, preferably in each case two arranged symmetrically on either side of a centre axis of the holding space 34, are formed in the base portion 22.

Each channel 36 has an opening on the side of the base portion 22 with the lips 24 and 26 and an opening on an upper edge, located furthest away from the short lips 26, of the base portion 22. Each channel 36 is suitable for a tie member, such as a barbed tiewrap (not shown), to be fitted through it. As a result, the securing element 20 can be firmly and captively secured to a wire 6-12 of the wire cable tray 2 using one or more tie members.

During production, in particular by injection moulding, of the securing element 20, it is also possible to form bolts, such as the bolt 40, in such a manner that they can be broken off the securing element 20 in the event of wanted use of a bolt. These or separately formed bolts 40 are suitable for screwing into the threaded holes 38.

Fig. 3 shows a perspective view of the securing element 20 of Fig. 2, against which a box 42 has been placed. The box 42 has in particular been placed against a main side of the base portion 22 of the securing element 20 which the lips 24 and 26 do not start from. The box 42 can be secured to the securing element 20 by fitting one or more bolts 40 from the inside of the box 42 through openings formed in the bottom of the box and by then screwing the bolts 40 into the threaded holes 38 of the securing element 20.

A fitter can secure the box 42 to the securing element 20 under safe conditions, for example when standing on the floor, before securing the assembly obtained in this way to the wire cable tray 2 under less safe conditions, for example when standing on a ladder. The fitter can safely produce a plurality of assemblies of this type in advance before starting to fit them to one or more wire cable trays, optionally of different types. On account of the fact that the securing element 20 according to the invention can be used universally, it may also be economically advantageous for assemblies of this type to be delivered ex works.

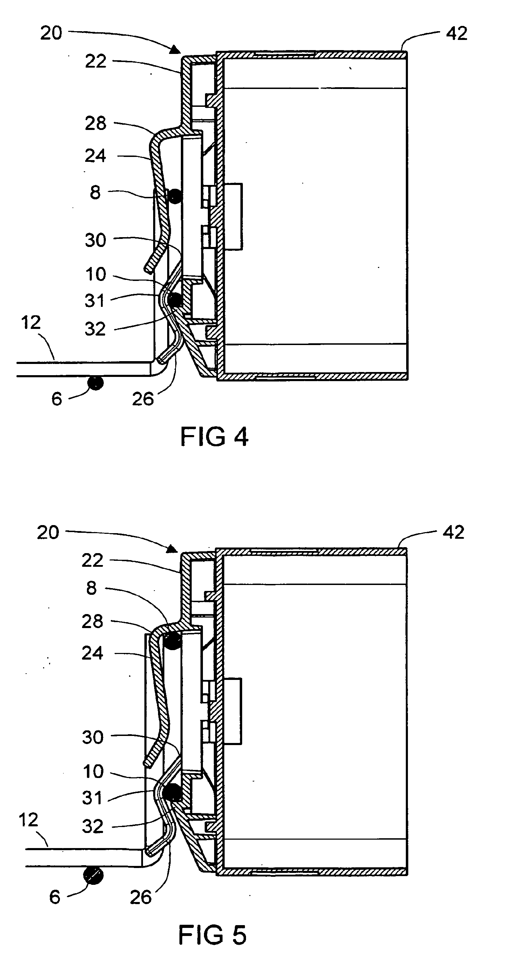

Figs. 4 and 5 show cross sections through an assembly of the securing element 20 and a box 42 in a plane passing through the lugs 32 and transversely to axes of rotation of the lips 24 and 26. The assembly has been positioned on a tray 2, of which Figs. 4 and 5 show a view of a portion of a transverse wire 12 and cross sections through the longitudinal wires 6, 8 and 10.

Although denoted by the same numbers, the longitudinal wires 8 and 10 in the configuration of Fig. 4 have a smaller diameter than in the configuration of Fig. 5. Moreover, the distance between the longitudinal wires 8 and 10 in the configuration of Fig. 4 is smaller than in the configuration of Fig. 5. On account of the fact that the lips 24 and 26 can move flexibly, Figs. 4 and 5 illustrate that the securing element 20 is suitable for use for wire cable trays with different diameters of and different distances between longitudinal wires 8, 10 at the sides of a wire cable tray, which means that the securing element 20 can be used universally.

The securing element 20 or an assembly of the securing element 20 and a box 42 is attached to a wire cable tray 2 as follows. Starting from an orientation of the securing element 20 which has been rotated through about 25 degrees to the right with respect to Fig. 4, the securing element 20 is moved towards the wire cable tray 2, in such a manner that the free ends of the long lips 24 fit over the top wire 8 of the tray and the free ends of the short lips 26 fit over a lower longitudinal wire 10 on the side of the tray. When the securing element 20 is then moved further towards the tray 2 and is at the same time rotated to the left, the longitudinal wires 8 and 10 will be received beneath the lips 24 and 26. If still necessary, the securing element 20 is moved further towards the bottom of the tray 2 with the result that the lower longitudinal wire 10 is held by the protuberances 31 of the short lips 26. As can be seen clearly from Figs. 4 and 5, the lugs 32 then prevent an unintentional movement in the opposite direction. To remove the securing element 20 from the tray 2, it is necessary for the fitter first of all to bend the short lips 26 sufficiently far away from the base portion 22 of the securing element 20.

There are wire cable trays whose sides have only a single wire, in particular the top wire 8 from Fig. 1. The lips 24 and 26 are not then themselves suitable for coupling the securing element to the wire cable tray in such a manner that it subsequently adopts a stable position with respect to the wire cable tray. By using an abovementioned tie member (such as a tiewrap) which is fitted through a channel 36 and which is wrapped around a wire 6-12 of the tray, it is still possible for the securing element 20 to be firmly secured to the tray.

The securing element 20 preferably consists of plastics material. This makes it easy to produce and also makes it easy to avoid sharp edges and projections which could injure a fitter.

If the securing element 20 consists of plastics material and a box 42 for which it is intended also consists of plastics material, it is possible for the securing element 20 together with the box 42 to be produced as a single element, in particular by injection moulding.

## Claims

1. Securing element (20) for securing a box (42) to a wire cable tray (2) assembled from longitudinal wires (6-10) and transverse wires (12), comprising a base portion (22), of which a substantially flat first main side, which is to be arranged against the tray, has lips (24, 26) which are suitable for positioning over respective parallel longitudinal wires of the tray and for holding the securing element on the tray, wherein the lips face in the same direction, **characterized in that** a transition portion (28, 30) from the lips to the first main side is resilient, and at least one lip (24) of a first type has a dimension between the resilient portion (28) of the lip (24) and the free end of the lip (24) which is greater than four times the diameter of a longitudinal wire.

2. Securing element (20) according to claim 1, **characterized in that** a distance between the lip (24) of the first type and the first main side of the base portion (22) is such that the lip of the first type presses against the wire over which the lip of the first type has been positioned.

3. Securing element (20) according to claim 1 or 2, **characterized in that** at least one lip (26) of a second type of the lips, in a direction away from the base portion (22), has a protuberance (31) which is suitable for receiving the wire over which the lip of the second type has been positioned.

4. Securing element (20) according to a preceding claim, **characterized in that** the lips comprise two lips (26) which, as seen parallel to axes of symmetry of the lips (26), have a space (34) between them which is suitable for receiving a transverse wire of the tray with a small clearance.

5. Securing element (20) according to claim 4, **characterized in that** a distance between the lips (26) which form the space (31) decreases the more closely to the first main side the distance is measured.

6. Securing element according to claim 4 or 5, **characterized in that** the lips (26) which form the space (31) are lips (26) of the second type.

7. Securing element (20) according to one of claims 3 to 6, **characterized in that** the base portion (22), at a lip (26) of the second type, as seen from the resilient portion (30) of the lip (26) beyond a portion of the protuberance (31) of the lip (26), has a projection (32) which is suitable for locking a longitudinal wire, which has been received in the protuberance (31) in the longitudinal direction, in the protuberance (31).

8. Securing element (20) according to a preceding claim, **characterized in that** the base portion (22) has at least one channel (36) which is suitable for a tie member to be passed through.

9. Securing element (20) according to claim 8, **characterized in that** the base portion (22) has two channels (36) which are formed symmetrically on either side of an axis of symmetry of an arrangement of the lips (24, 26).

10. Securing element (20) according to a preceding claim, **characterized in that** the base portion (22) has at least one threaded hole (38) for a bolt to be screwed into from the box (42).

11. Securing element (20) according to claim 10, **characterized in that** the base portion (22) has two threaded holes (38), which are formed symmetrically on either side of an axis of symmetry of an arrangement of the lips (24, 26).

12. Securing element (20) according to a preceding claim, **characterized in that** it consists of plastics material.

13. Box, suitable for use in combination with a wire cable tray (2) and provided with an integrated securing element (20) according to one of the preceding claims.

## Patentansprüche

1. Befestigungselement (20) zum Befestigen eines Kastens (42) an einer Drahtkabelführung (2), die aus longitudinalen Drähten (6-10) und transversalen Drähten (12) zusammengefügt ist, das einen Basisabschnitt (22) umfasst, wovon eine im Wesentlichen ebene erste Hauptseite, die an der Führung anliegend angeordnet ist, Lippen (24, 26) besitzt, die geeignet sind, um über jeweiligen parallelen longitudinalen Drähten der Führung positioniert zu werden und um das Befestigungselement an der Führung zu halten, wobei die Lippen in dieselbe Richtung weisen, **dadurch gekennzeichnet, dass** ein Übergangsabschnitt (28, 30) von den Lippen zu der ersten Hauptseite nachgiebig ist und wenigstens eine Lippe (24) eines ersten Typs eine Abmessung zwischen dem nachgiebigen Abschnitt (28) der Lippe (24) und dem freien Ende der Lippe (24) besitzt, die größer als der vierfache Durchmesser eines longitudinalen Drahts ist.

2. Befestigungselement (20) nach Anspruch 1, **dadurch gekennzeichnet, dass** ein Abstand zwischen der Lippe (24) des ersten Typs und der ersten Hauptseite des Basisabschnitts (22) derart ist, dass die Lippe des ersten Typs gegen den Draht, über dem die Lippe des ersten Typs positioniert worden ist, drückt.

3. Befestigungselement (20) nach Anspruch 1 oder 2, **dadurch gekennzeichnet, dass** wenigstens eine Lippe (26) eines zweiten Typs der Lippen in einer Richtung weg von dem Basisabschnitt (22) eine Ausstülpung (31) besitzt, die geeignet ist, den Draht, über dem die Lippe des zweiten Typs positioniert worden ist, aufzunehmen.

4. Befestigungselement (20) nach einem vorhergehenden Anspruch, **dadurch gekennzeichnet, dass** die Lippen zwei Lippen (26) umfassen, die bei Betrachtung parallel zu Symmetrieachsen der Lippen (26) zwischen sich einen Raum (34) aufweisen, der geeignet ist, einen transversalen Draht der Führung mit einem geringen Zwischenraum aufzunehmen.

5. Befestigungselement (20) nach Anspruch 4, **dadurch gekennzeichnet, dass** ein Abstand zwischen den Lippen (26), die den Raum (31) bilden, abnimmt, je näher bei der ersten Hauptseite der Abstand gemessen wird.

6. Befestigungselement nach Anspruch 4 oder 5, **dadurch gekennzeichnet, dass** die Lippen (26), die den Raum (31) bilden, Lippen (26) des zweiten Typs sind.

7. Befestigungselement (20) nach einem der Ansprüche 3 bis 6, **dadurch gekennzeichnet, dass** der Basisabschnitt (22) bei einer Lippe (26) des zweiten Typs bei Betrachtung von dem nachgiebigen Abschnitt (30) der Lippe (26) jenseits eines Abschnitts der Ausstülpung (31) der Lippe (26) einen Vorsprung (32) besitzt, der geeignet ist, einen longitudinalen Draht, der in der Ausstülpung (31) in der Längsrichtung aufgenommen worden ist, in der Ausstülpung (31) zu verriegeln.

8. Befestigungselement (20) nach einem vorhergehenden Anspruch, **dadurch gekennzeichnet, dass** der Basisabschnitt (22) wenigstens einen Kanal (36) besitzt, durch den sich ein Bindelement bewegen kann.

9. Befestigungselement (20) nach Anspruch 8, **dadurch gekennzeichnet, dass** der Basisabschnitt (22) zwei Kanäle (36) besitzt, die symmetrisch beiderseits einer Symmetrieachse einer Anordnung der Lippen (24, 26) ausgebildet sind.

10. Befestigungselement (20) nach einem vorhergehenden Anspruch, **dadurch gekennzeichnet, dass** der Basisabschnitt (22) wenigstens eine Gewindebohrung (38) für einen Bolzen besitzt, der von dem Kasten (42) hineingeschraubt werden soll.

11. Befestigungselement (20) nach Anspruch 10, **dadurch gekennzeichnet, dass** der Basisabschnitt (22) zwei Gewindebohrungen (38) besitzt, die symmetrisch beiderseits einer Symmetrieachse einer Anordnung der Lippen (24, 26) ausgebildet sind.

12. Befestigungselement (20) nach einem vorhergehenden Anspruch, **dadurch gekennzeichnet, dass** es aus Kunststoff besteht.

13. Kasten, der für die Verwendung in Kombination mit einer Drahtkabelführung (2) geeignet ist und mit einem integrierten Befestigungselement (20) nach einem der vorhergehenden Ansprüche versehen ist.

## Revendications

1. Elément de fixation (20) destiné à fixer une boîte (42) à un chemin de câbles (2) composé de fils longitudinaux (6 à 10) et de fils transversaux (12), comportant une partie de base (22), dont un premier côté principal sensiblement plat, qui doit être disposé contre le chemin de câbles, comporte des lèvres (24, 26) qui sont conçues pour être positionnées par dessus les fils longitudinaux parallèles respectifs du chemin de câbles et pour maintenir l'élément de fixation sur le chemin de câbles, les lèvres étant orientées dans le même sens, **caractérisé en ce qu'**une partie de transition (28, 30), allant des lèvres au premier côté principal, est souple et qu'au moins une lèvre (24) d'un premier type a une dimension, comprise entre la partie souple (28) de la lèvre (24) et l'extrémité libre de la lèvre (24), qui est supérieure à quatre fois le diamètre d'un fil longitudinal.

2. Elément de fixation (20) selon la revendication 1, **caractérisé en ce qu'**une distance entre la lèvre (24) du premier type et le premier côté principal de la partie de base (22) est telle que la lèvre du premier type est comprimée contre le fil par dessus lequel la lèvre du premier type a été positionnée.

3. Elément de fixation (20) selon la revendication 1 ou 2, **caractérisé en ce qu'**au moins une lèvre (26) d'un second type de lèvre, dans un sens s'éloignant de la partie de base (22), présente une protubérance (31) qui sert à recevoir le fil par dessus lequel la lèvre du second type a été positionnée.

4. Elément de fixation (20) selon l'une quelconque des revendications précédentes, **caractérisé en ce que** les lèvres comportent deux lèvres (26) qui, comme on le voit parallèlement aux axes de symétrie des lèvres (26), ont un espace (34) entre elles qui sert à recevoir un fil transversal du chemin avec un faible écartement.

5. Elément de fixation (20) selon la revendication 4, **caractérisé en ce qu'**une distance entre les lèvres (26), qui forment l'espace (31), diminue à mesure que l'on se rapproche du premier côté principal.

6. Elément de fixation selon la revendication 4 ou 5, **caractérisé en ce que** les lèvres (26), qui forment l'espace (31), sont des lèvres (26) du second type.

7. Elément de fixation (20) selon l'une quelconque des revendications 3 à 6, **caractérisé en ce que** la partie de base (22), au niveau d'une lèvre (26) du second type, vue de la partie souple (30) de la lèvre (26), au-delà d'une partie de la protubérance (31) de la lèvre (26), présente une saillie (32) qui sert à bloquer un fil longitudinal qui est logé dans la protubérance (31) dans le sens longitudinal, dans la protubérance (31).

8. Elément de fixation (20) selon l'une quelconque des revendications précédentes, **caractérisé en ce que** la partie de base (22) présente au moins un canal (36) à travers lequel on peut passer un dispositif d'attache.

9. Elément de fixation (20) selon la revendication 8, **caractérisé en ce que** la partie de base (22) présente deux canaux (36) qui sont réalisés de manière symétrique de chaque côté d'un axe de symétrie d'un agencement des lèvres (24, 26).

10. Elément de fixation (20) selon l'une quelconque des revendications précédentes, **caractérisé en ce que** la partie de base (22) présente au moins un trou taraudé (38) pour un boulon devant être vissé dedans de la boîte (42).

11. Elément de fixation (20) selon la revendication 10, **caractérisé en ce que** la partie de base (22) présente deux trous taraudés (38) qui sont réalisés de manière symétrique sur chaque côté d'un axe de symétrie d'un agencement des lèvres (24, 26).

12. Elément de fixation (20) selon l'une quelconque des revendications précédentes, **caractérisé en ce qu'**il est composé d'un matériau plastique.

13. Boîte destinée à être utilisée en association avec un chemin de câbles (2) et munie d'un élément de fixation intégré (20) selon l'une quelconque des revendications précédentes.
